# EUROPEAN PATENT SPECIFICATION

(11) **EP 3 047 383 B1**
(45) Date of publication and mention of the grant of the patent: **04.12.2019**
(21) Application number: 14846630.3
(22) Date of filing: 16.09.2014
(51) Int. Cl.: H04N 7/15, G06F 3/0484, G06F 13/14, G06F 3/14, G09G 5/14, G06F 3/0481

(54) **METHOD FOR SCREEN MIRRORING AND SOURCE DEVICE THEREOF**
BILDSCHIRMSPIEGELUNGSVERFAHREN UND QUELLVORRICHTUNG DAFÜR
PROCÉDÉ DE DUPLICATION D'ÉCRAN, ET DISPOSITIF SOURCE ASSOCIÉ

(30) Priority: 17.09.2013 KR 20130112069
(43) Date of publication of application: 27.07.2016
(73) Proprietor: Samsung Electronics Co., Ltd., Gyeonggi-do 16677 (KR)
(72) Inventor: KANG, Pil Seob, Suwon-si Gyeonggi-do 443-749 (KR); HAHM, Seong Il, Yongin-si Gyeonggi-do 446-746 (KR); HWANG, Tae Hwan, Suwon-si Gyeonggi-do 443-811 (KR)
(74) Representative: HGF Limited
(86) International application number: PCT/KR2014/008600
(87) International publication number: WO 2015/041438

(56) References cited:
- WO-A1-2009/140766
- JP-A- 2012 128 480
- JP-A- 2013 073 249
- KR-A- 20120 015 931
- KR-A- 20130 033 044
- US-A1- 2007 219 981
- US-A1- 2013 159 874
- Anonymous: "Visimeet Desktop Sharing", , 25 April 2012 (2012-04-25), XP055357454, Retrieved from the Internet: URL:http://web.archive.org/web/20120425014 318/http://www.iocom.com/docs/Visimeet_Dat a_Sharing.pdf [retrieved on 2017-03-22]
- Smart Technologies: "SMARTBridgit 4.5 software User's Guide", , 1 February 2012 (2012-02-01), XP055356938, Retrieved from the Internet: URL:http://downloads.smarttech.com/media/s itecore/en/support/product/smartbridgit/4w indows/guides/usersguidebridgit4_5v02feb12 .pdf [retrieved on 2017-03-21]
- Amit Surana: "Introducing IBM SmartCloud Meetings", , 22 June 2012 (2012-06-22), XP055357954, Retrieved from the Internet: URL:https://www.ibm.com/developerworks/lot us/library/lotuslive-meetings/ [retrieved on 2017-03-23]
- ANONYMOUS: "Mechanism and User Interface for Remote Mirroring of Application Windows", IBM TECHNICAL DISCLOSURE BULLETIN, vol. 36, no. 6A, 1 June 1993 (1993-06-01), pages 471-472, New York, US

## Description

### Technical Field

The present disclosure relates to a method for screen mirroring and a source device thereof. More particularly, the present disclosure relates to a method and apparatus for mirroring and displaying at least one screen displayed in at least one display device in at least one other display device.

### Background Art

As wired and/or wireless communication networks are developed, electronic devices that display screens to output data visually recognizable by users may be connected to one another through a wired and/or wireless communication network.

The electronic devices may transmit and receive various types of data with one another through the wired and/or wireless communication network. A mirroring technique is used to perform remote control and/or sharing between the electronic devices.

The mirroring technique refers to a technique for sharing and controlling screen data between apparatuses having display units. For example, according to the mirroring technique, screen data may be shared between Personal Computers (PCs).

The mirroring technique is developed to be applied to all types of electronic devices that may output and/or display screens through display units, such as portable computers, such as notebook computers, netbook computers, tablet PCs, or the like, portable terminals, such as smartphones and/or Personal Digital Assistants (PDAs), Televisions (TVs), and the like. A mirror service may be provided to apply the mirroring technique to a plurality of electronic devices, thereby sharing screens and performing remote control between the plurality of electronic devices. Techniques for providing the mirroring service include Display as a service (Daas), Miracast, Airplay, etc.

Hereinafter, all types of electronic devices that share and display screens to use the mirroring service are referred to as display devices.

To provide the mirroring service, image data is transmitted from a device that provides an image to a device that is provided with the image. Here, the device that provides the image may be referred to as a source device and/or a master device, and the device that is provided with the image may be referred to as a sink device and/or a client device. Hereinafter, the device that provides the image is referred to as a source device, and the device that is provided with the image is referred to as the sink device.

The mirroring service shares and displays a same screen between a plurality of display devices that are connected to one another through a network. In other words, to provide the mirroring service, the source device transmits a screen displayed therein to the sink device as it is, and the sink device displays the received screen as it is. Therefore, when using the mirroring service, a part of the mirroring screen cannot be changed according to an intention of a user. The mirroring service is not continuously used and stops to change the mirroring screen according to the intention of the user.

Therefore, a method and apparatus for elastically and/or dynamically using a mirroring service according to an intention of a user may be provided.

The above information is presented as background information only to assist with an understanding of the present disclosure. No determination has been made, and no assertion is made, as to whether any of the above might be applicable as prior art with regard to the present disclosure.

International patent application WO 2009/140766 A1 (Smart Technologies ULC) describes a desktop sharing application, method and computer readable medium for displaying information shared between at least two computers in a distributed computer network.

### Disclosure of Invention

### Technical Problem

The mirroring service shares and displays a same screen between a plurality of display devices that are connected to one another through a network. In other words, to provide the mirroring service, the source device transmits a screen displayed therein to the sink device as it is, and the sink device displays the received screen as it is. Therefore, when using the mirroring service, a part of the mirroring screen cannot be changed according to an intention of a user. The mirroring service is not continuously used and stops to change the mirroring screen according to the intention of the user.

### Solution to Problem

Aspects of the present disclosure are to address at least the above-mentioned problems and/or disadvantages and to provide at least the advantages described below. Accordingly, an aspect of the present disclosure is to provide a method of screen mirroring, which a screen is elastically changed according to an intention of a user when using a mirroring service, and a source device thereof.

### Advantageous Effects of Invention

According to the one or more of the above embodiments of the present disclosure, in a method for screen mirroring and a source device thereof, a screen mirrored when using a mirroring service may be changed and used according to an intention of a user. Therefore, the mirroring service may be variously used according to the intention of the user.

### Brief Description of Drawings

The above and other aspects, features, and advantages of certain embodiments of the present disclosure will be more apparent from the following description taken in conjunction with the accompanying drawings, in which:
FIGS. 1A and 1B are block diagrams illustrating a mirroring connection, according to an embodiment of the present disclosure;
FIGS. 2A and 2B are block diagrams illustrating a mirroring connection, according to another embodiment of the present disclosure;
FIG. 3 is a block diagram illustrating a source device and a sink device, according to an embodiment of the present disclosure;
FIG. 4 is a flowchart illustrating a method for screen mirroring, according to an embodiment of the present disclosure;
FIG. 5 is a view illustrating detailed operations of a method for screen mirroring, according to an embodiment of the present disclosure;
FIG. 6 is a view illustrating an area selection operation of a method for screen mirroring, according to an embodiment of the present disclosure;
FIGS. 7A and 7B are views illustrating an area selection operation of a method for screen mirroring, according to another embodiment of the present disclosure;
FIG. 8 is a view illustrating an area selection operation of a method for screen mirroring, according to another embodiment of the present disclosure;
FIGS. 9A and 9B are views illustrating an area selection operation of a method for screen mirroring, according to another embodiment of the present disclosure;
FIG. 10 is a flowchart illustrating a method for screen mirroring, according to another embodiment of the present disclosure;
FIGS. 11A and 11B are views illustrating a menu selection operation and a device selection operation in a method for screen mirroring, according to another embodiment of the present disclosure;
FIG. 12 is a view illustrating detailed operations of a method for screen mirroring, according to another embodiment of the present disclosure;
FIGS. 13A and 13B are views illustrating detailed operations of a method for screen mirroring, according to another embodiment of the present disclosure;
FIGS. 14A and 14B are views illustrating detailed operations of a method for screen mirroring, according to another embodiment of the present disclosure;
FIG. 15 is a flowchart illustrating detailed operations of a method for screen mirroring, according to another embodiment of the present disclosure;
FIG. 16 is a flowchart illustrating detailed operations of a method for screen mirroring, according to another embodiment of the present disclosure; and
FIG. 17 is a view illustrating detailed operations of a method for screen mirroring, according to another embodiment of the present disclosure.
The same reference numerals are used to represent the same elements throughout the drawings.

### Best Mode for Carrying out the Invention

In accordance with an aspect of the present disclosure, a source device is provided. The source device includes a display unit configured to display a first screen, an input unit configured to receive a selection of a first area on the first screen, a controller, configured to, when a mirroring service is executed, process the first area independently of a second area that is an area except the first area in the first screen, and to mirror the first screen reflecting the processing on at least one sink device, and a communicator configured to transmit image data corresponding to the first screen.

In accordance with another aspect of the present disclosure, a method for screen mirroring is provided. The method includes mirroring a first screen displayed on at least one source device to display a second screen on at least one sink device, selecting a first area on the first screen, processing the first area independently of a second area that is an area of the first screen except the first area, and displaying the first screen on the at least one source device by reflecting the processing and displaying the second screen on the at least one sink device by mirroring the first screen.

Other aspects, advantages, and salient features of the disclosure will become apparent to those skilled in the art from the following detailed description, which, taken in conjunction with the annexed drawings, discloses various embodiments of the present disclosure.

### Mode for the Invention

This application claims the benefit under 35 U.S.C. 119(a) of Korean patent application filed on September 17, 2013 in the Korean Intellectual Property Office and assigned Serial number 10-2013-0112069.

The following description with reference the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms a, an, and the include plural referents unless the context clearly dictates otherwise. Thus, for example, reference to a component surface includes reference to one or more of such surfaces.

A method for screen mirroring and a source device thereof according to an embodiment of the present disclosure will now be described with reference to the attached drawings.

As described above, a plurality of display devices may be connected to one another to be remotely controlled and shared.

The plurality of display devices that use a mirroring service include at least one source device and at least one sink device. The at least one source device and the at least one sink device are connected to each other through a wired and/or wireless communication network.

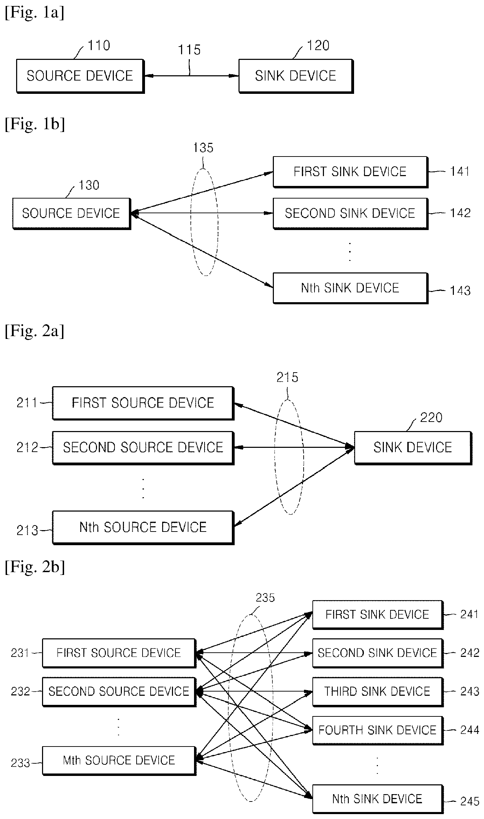

A connection relation between a display device and a plurality of display devices using a mirroring service according to an embodiment of the present disclosure will now be described with reference to FIGS. 1A through 2B.

The display device shown in FIGS. 1A through 2B may be an electronic device including a display unit, for example, may be a portable computer, such as a notebook computer, a netbook computer, a tablet Personal Computer (PC), or the like, a portable terminal, such as a smartphone or a Personal Digital Assistant (PDA), a computer, a smart Television (TV), or the like.

A source device and a sink device that are hereinafter described are relative concepts, or in other words, a source device and a sink device are named according a relative relationship between two devices. Therefore, a display device that transmits preset image data may be referred to as a source device, and a display device that receives and mirrors the preset image data may be referred to as a sink device.

FIGS. 1A and 1B are views illustrating a mirroring connection according to an embodiment of the present disclosure.

Referring to FIGS. 1A and 1B, one source device and at least one sink device are connected to each other.

Referring to FIG. 1A, a source device 110 and a sink device 120 are connected to each other in a 1:1 network topology. In detail, the source device 110 is connected to the sink device 120 in a 1:1 network topology through a network 115.

Here, the network 115 is a wired and/or wireless communication network through which data may be transmitted and received. The network 115 may be formed according to various types of communication network standards and/or types, such as Local Area Network (LAN), Wide Area Network (WAN), Third Generation (3G), Long Term Evolution (LTE), Wireless LAN (WLAN), Wireless Broadband (Wibro), Code Division Multiple Access (CDMA), Wideband CDMA (WCDMA), Near Field Communication (NFC), etc.

The source device 110 may display a menu screen for controlling an operation of the source device 110, a screen for reproducing a picture, or the like. The source device 110 transmits image data corresponding to a currently displayed screen to the sink device 120. In detail, the source device 110 may transmit image data corresponding to a whole screen that is currently displayed and/or may divide the whole screen to transmit image data corresponding to at least one of the divided screens.

The sink device 120 receives image data corresponding to a screen displayed in the source device 110 through the network 115. The sink device 120 may also decode the image data received from the source device 110 to generate a screen and display the generated screen.

In detail, the sink device 120 unitarily or multiply receives the screen displayed in the source device 110. The sink device 120 may display the same screen as the screen displayed in the source device 110 by using the received image data. In detail, the sink device 120 may display the whole or a part of the screen displayed in the source device 110.

Referring to FIG. 1B, a source device 130 is connected to a plurality of sink devices 141, 142, and 143 in a 1:n network topology. In detail, the source device 130 is connected to the plurality of sink devices 141, 142, and 143 through a network 135 in a 1:n network topology.

Referring to FIG. 1B, the source device 130 may copy and transmit a whole screen to the plurality of sink devices 141, 142, and 143 and/or may copy and transmit an area of the screen and/or respectively transmit different areas of the screen.

Descriptions of the same reference numerals of 1B as those of FIG. 1 are omitted.

FIGS. 2A and 2B are block diagrams illustrating a mirroring connection according to another embodiment of the present disclosure.

Referring to FIGS. 2A and 2B, a plurality of source devices 211, 212, and 213 are connected to a sink device 220.

Referring to FIG. 2A, the plurality of source devices 211, 212, and 213 are connected to the sink device 220 in an n:1 network topology. In detail, the source devices 211, 212, and 213 are connected to the sink device 220 through a network 215 in the n:1 network topology.

Referring to FIG. 2A, the plurality of source devices 211, 212, and 213 respectively transmit image data to the sink device 220. The sink device 220 may selectively display a screen corresponding to particular one of a plurality of pieces of image data. The sink device 220 aggregates a plurality of images included in the plurality of pieces of image data to generate one screen and display the generated screen.

Referring to FIG. 2B, a plurality of source devices 231, 232, and 233 are connected to a plurality of sink devices 241, 242, 243, 244, and 245 in an m:n network topology. In detail, the plurality of source devices 231, 232, and 233 are connected to the plurality of sink devices 241, 242, 243, 244, and 245 through a network 235 in the m:n network topology.

Referring to FIG. 2B, the plurality of source devices 231, 232, and 233 respectively transmit image data to the plurality of sink devices 241, 242, 243, 244, and 245. The plurality of sink devices 241, 242, 243, 244, and 245 may selectively display a screen corresponding to particular one of a plurality of pieces of image data. The plurality of sink devices 241, 242, 243, 244, and 245 aggregate a plurality of images included in the plurality of image data to generate one screen and display the generated screen.

According to a general mirroring technique, when using a mirroring service, even if a mirroring screen includes a screen that a user does not want to share, the screen may be continuously shared. In other words, if the mirroring screen includes the screen that the user does not want to share when using the mirroring service, the mirroring service pauses not to update a screen of another display device and/or the mirroring service stops.

In other words, all types of display devices that use the mirroring service may display the same screen and may not independently and/or respectively control a mirroring screen according to an intention of the user. Therefore, the user has difficulty using the mirroring service.

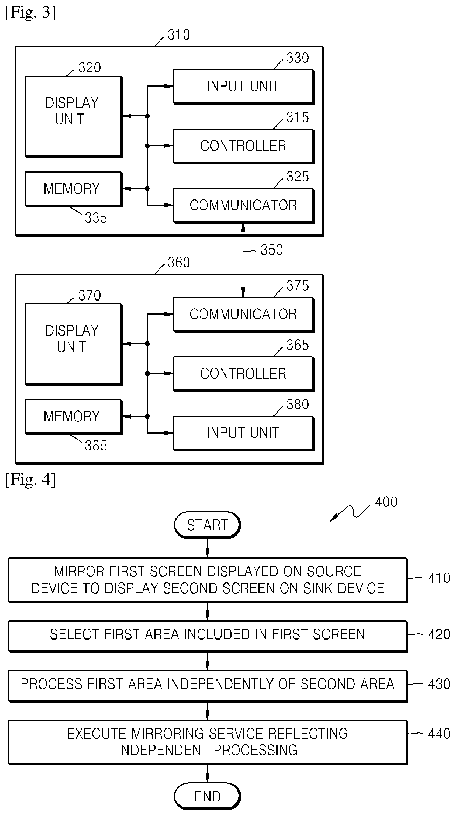

In a method for screen mirroring and a sink device thereof according to an embodiment and another embodiment of the present disclosure, a mirroring screen may be independently and/or respectively changed between display devices that use a mirroring service, according to an intention of the user to increase convenience of the user. A method and apparatus for providing a mirroring service that further match an intention of a user will now be described in detail with reference to FIGS. 3

FIG. 3 is a block diagram illustrating a display device according to an embodiment of the present disclosure. The display device according to the present embodiment may be an electronic device that may use a mirroring service through a wireless network as described above, and may be, for example, a source device 310, a sink device 360.

Referring to FIG. 3, one of the source device 310 and/or the sink device 360 may be considered to be the display device. Detailed structures and operations of the source device 310 and the sink device 360 are the same or similar. However, a display device that transmits a mirroring screen is referred to as the source device 310, and a display device that receives the mirroring screen is referred to as the sink device 360.

As described above with reference to FIGS. 1A through 2B, the source device 310 and the sink device 360 may be connected to each other in a 1:1 network topology, a 1:n network topology, an n:1 network topology, an m:n network topology, and/or any other similar and/or suitable network topology.

In FIG. 3, the source device 310 and the sink device 360 are connected to each other in the 1:1 network topology via a network 350.

Referring to FIG. 3, the source device 310 includes a controller 315, a display unit 320, a communicator 325, and input unit 330. The source device 310 may further include a memory 335.

The controller 315 generates image data. In detail, the controller 315 may decode image data, such as still image data or moving picture data, to generate a screen that will be displayed on the display unit 320. Alternatively, the controller 315 may generate a User Interface (UI) screen or the like.

The display unit 320 displays the image data generated by the controller 315. In detail, the display unit 320 receives a screen corresponding to the image data generated by the controller 314 and outputs the screen through a display panel (not shown). Hereinafter, a screen that is displayed by the display unit 320 and mirrored by the sink device 360 will be referred to as a first screen. In other words, when executing a mirroring service, the display unit 320 displays the first screen.

The communicator 325 transmits and receives data to and/or from other connected display devices through a network 350. In detail, the communicator 325 may transmit the image data generated by the controller 315 to at least one another display device, for example, a communicator 375 of the sink device 360.

The communicator 325 may include a communication module for accessing the network 350 by wired and/or wireless communication. For example, the communicator 325 may include communication module according to communication standard of WLAN Wi-Fi, 3G, LTE, Wibro, World interoperability for microwave access (Wimax), CDMA, WCDMA, or the like.

The communicator 325 may include a communication module according to a communication standard of Near Field Communication (NFC). Therefore, if the source device 310 and the sink device 360 are adjacent to each other and/or contact each other by supporting a close connection method, the communicator 325 may transmit and preset data to and/or from the sink device 360.

The input unit 330 receives a request, a command, and/or other data for controlling an operation of the source device 310 from a user.

The input unit 330 may be realized as a touch screen. In detail, the input unit 330 may include a touch pad (not shown) that is combined with the display panel (not shown), output the touch screen to the display panel, receive a command through the touch screen, and sense the preset command through the touch pad.

For example, if the input unit 330 is realized as the touch screen, the input unit 330 may output a menu screen, which is a UI screen, on the display panel combined with the touch pad. If the user touches a place of the menu screen, for example, a place at which a mirroring service menu is displayed, the input unit 330 senses the touched place. The input unit 330 may transmit sensed information to the controller 315.

The controller 315 may recognize a request and/or command of the user corresponding to a menu displayed at the sensed place and perform the recognized request and/or command. For example, if the place at which the mirroring service menu is displayed, the input unit 330 may transmit information for requesting execution of the mirroring service to the controller 315. Alternatively, if the input unit 330 transmits position information about the touched place to the controller 315, the controller 315 may control the source device 310 to sense that a menu corresponding to the position information is the mirroring service menu and may execute the mirroring service.

The memory 335 may store various types of data, programs for operating the source device 310, transmitted and received data, etc.

In detail, the memory 335 may store image data that is transmitted when the source device 310 executes the mirroring service. In detail, the memory 335 may store image data of a first area selected from among image data corresponding to the first screen.

An operation of executing the mirroring service will now be described.

If the mirroring service is requested through the input unit 330, the controller 315 executes the requested mirroring service.

In detail, the controller 315 encodes and multiplexes image data of a currently displayed screen and generates a transmission stream. The communicator 325 transmits the transmission stream generated by the controller 315 to the sink device 360.

The sink device 360 is at least one other display device that is connected to the source device 310 through the network 350, for example, a display device that mirrors and outputs at least one displayed screen. Hereinafter, a screen that is mirrored and displayed by the sink device 360 will be referred to as a second screen.

A detailed operation of the source device 310 according to an embodiment of the present disclosure will be described later with reference to FIGS. through 17.

The sink device 360 includes a controller 365, a display unit 370, the communicator 375, and an input unit 380 that are the same as and/or similar to the controller 315, the display unit 320, the communicator 325, the input unit 330 in the source device 310, respectively. The sink device 360 may further include a memory 385.

The controller 365, the display unit 370, the communicator 375, the input unit 380, and the memory 385 respectively correspond to the controller 315, the display unit 320, the communicator 325, the input unit 330, and the memory 335, and thus their repeated descriptions are omitted.

The communicator 375 receives at least one image data from at least one display device. In detail, the communicator 375 is connected to the communicator 325 of the source device 320 through the network 350 by wired and/or wireless and receives the image data, including the first screen, from the communicator 325.

The controller 365 generates screen corresponding to at least one of the received image data or a part of the at least one of the received image data. In detail, the controller 365 generates a second screen corresponding to the received image data to mirror at least one image data that is displayed by at least one source device that is at least one another display device, for example, the source device 310.

The controller 365 may mirror a whole screen corresponding to the image data or a part of the screen corresponding to a part of the received image data. Alternatively, if a plurality of pieces of image data corresponding to a plurality of screens are received, the controller 365 combines at least one of the plurality of pieces of image data to generate one screen.

The display unit 370 displays the screen generated by the controller 365. Since the mirroring service is executed, the display unit 370 displays the second screen into which the first screen is mirrored. Hereinafter, the second screen will be described as being the same as the first screen. In detail, the second screen may be the first screen or a screen that is formed by enlarging a part of the first screen.

The memory 385 receives and stores transmitted image data when executing the mirroring service with the source device 310. In detail, the memory 385 may receive image data corresponding to the first screen, and buffer and store first image data. The memory 385 may buffer and store image data corresponding to a first area selected from among image data of the first screen.

FIG. 4 is a flowchart illustrating a method for screen mirroring according to an embodiment of the present disclosure.

Referring to FIG. 4, a method 400 according to the present embodiment will now be described with reference to the source device 310 and the sink device 360 of FIG. 3.

In the method 400, at least one of the sink device 360 receives at least one image data from at least one of the source device 310, and mirrors and displays a screen corresponding to at least one of the received image data. Hereinafter, the source device 310 and the sink device 360 are connected to each other in a 1:1 network topology as described with reference to FIG. 3.

Referring to FIG. 4, the method 400 executes a mirroring service. In detail, in operation 410, a first screen displayed in the at least one source device 310 is mirrored to display a second screen in the at least one sink device 360. The display unit 320 may display the first screen under control of the controller 315, and the display unit 370 may display the second screen under control of the controller 365 to perform operation 410.

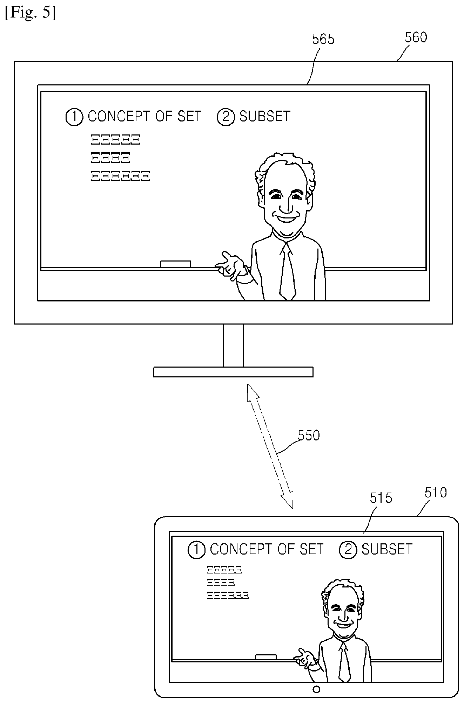

Operation 410 will now be described in more detail with reference to FIG. 5.

FIG. 5 is a view illustrating a detailed operation of a method for screen mirroring, according to an embodiment of the present disclosure.

Referring to FIG. 5, a tablet PC 510 is shown as a source device, and a smart TV 560 is shown as a sink device. For example, a user may mirror a video lecture played on the tablet PC 510 onto the smart TV 560 to view the video lecture.

In FIG. 5, the tablet PC 510 and the smart TV 560 respectively correspond to the source device 310 and the sink device 360 of FIG. 3, and FIG. 5 is described with reference to the elements depicted in FIG.3.

To execute the mirroring service, the communicator 375 of the sink device 360 receives at least one image data corresponding to a screen displayed by the source device 310 through the network 550.

In detail, the display unit 320 of the source device 310 plays image data, for example, a video lecture. If the mirroring service is requested from the input unit 330 of the source device 310 or the input unit 380 of the sink device 360, the controller 315 of the source device 310 encodes image data, including a screen of a video lecture that is currently displayed, to generate image data that is to be transmitted to the sink device 360. The communicator 325 transmits the image data generated by the controller 315 to the communicator 375 of the sink device 360.

The communicator 375 transmits and/or receives the image data and transmits the image data to the controller 365. The controller 365 decodes the image data to generate a screen that is to be displayed. The display unit 370 displays the screen generated by the controller 365.

Referring to FIG. 5, as the mirroring service is executed, a screen 565 of the smart TV 560 mirrors and outputs a screen 515 of the tablet PC 510. Therefore, a screen 565 and a screen 515 display a same screen as shown in FIG. 5.

In operation 420, a first area that is an area included in the first screen displayed by the source device is selected. In detail, the user may select the preset area through the input unit 330 of the source device 510. The controller 315 may also receive information about the selected preset area.

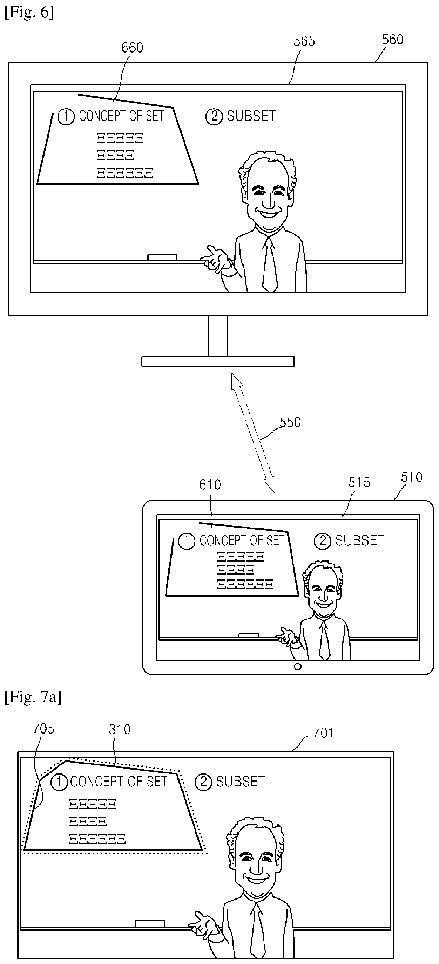

Operation 420 will now be described in more detail with reference to FIGS. 6 through 10.

FIG. 6 is a view illustrating an area selection operation of a method for screen mirroring, according to an embodiment of the present disclosure. The view of FIG. 6 equally corresponds to the view of FIG. 5, and a selection of an area is additionally displayed in FIG. 6 in comparison with FIG. 5.

In detail, operation 420 may further include an operation (not shown) of sensing a closed loop, i.e. an area, formed by one of a touch pen, a mouse, and a finger, and an operation (not shown) of determining the area formed according to the sensed closed loop.

To select the area, the user may touch or drag an area that is to be selected with a finger to draw the closed loop on the first screen. Alternatively, the user may draw the closed loop by using a user input unit, such as a touch pen, a mouse, or the like. In detail, the user may input the closed loop through the input unit 330.

If the user draws a closed loop 610 on the screen 515, which may also be referred to as a first screen 515, by using the touch pen, the closed loop 610 corresponding to a drawing motion of the user is displayed on the first screen 515 as shown in FIG. 6. In detail, the input unit 330 of the source device 310 may sense a closed loop forming motion of the user and display the closed loop 610 on the first screen 515 in real time. Also, as shown in FIG. 6, a formed closed loop 660 may be displayed on the screen 565, which may also be referred to as a second screen 565. Therefore, the user may check a selected area with watching the screen 565 of the sink device 560.

Hereinafter, an area selected in operation 420 is referred to as a first area, and an area except the first area on the first screen is referred to as a second area.

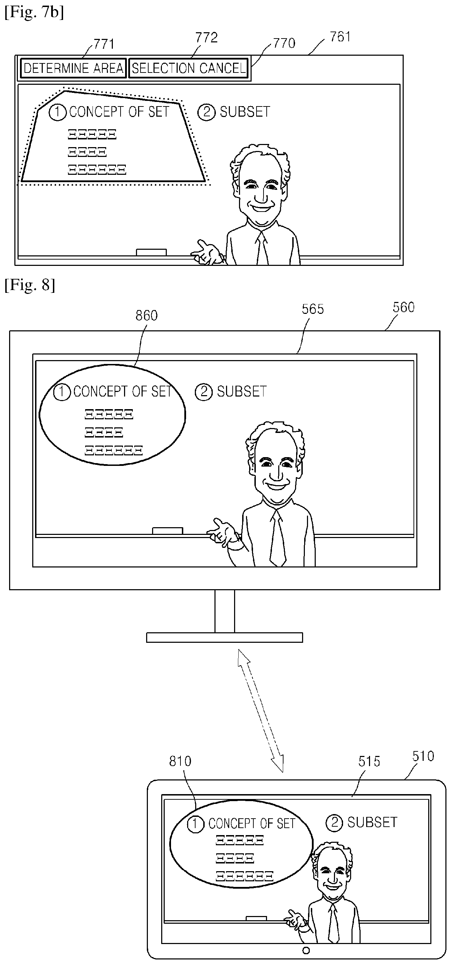

FIGS. 7A and 7B are views illustrating an area selection operation of a method for screen mirroring, according to another embodiment of the present disclosure. First screens 701 and 761 are displayed on the source device 310 in FIG. 7. The first screens 701 and 761 of FIG. 7 correspond to the screen 515 of the tablet PC 510 of FIGS. 5 and 6 that is a source device, and an element for determining a selected area is additionally displayed in FIG. 7 in comparison with FIGS. 5 and 6.

If a closed loop 705 is sensed in operation 420, operation 420 may further include an operation (not shown) of changing and displaying at least one of brightness and color in at least one section of the closed loop 705 on the first screen 701.

Referring to FIG. 7A, if the user continues a drawing motion to completely form a closed loop 705, flickering or a highlight 710 may be displayed to allow the user to further easily recognize the closed loop 705. The closed loop 705 may be highlighted and/or a color of the closed loop 705 may be changed to display the closed loop 705.

In detail, the input unit 330 of the source device 310 may sense the closed loop 705 generated according to a drawing motion of the user and, if the closed loop 705 is formed completely, may generate and display a screen for adding a display for highlighting the closed loop 705.

Referring to FIG. 7B, if a first area is selected on the first screen 761, a menu window 770 may be generated and displayed to finally determine a selected preset area.

For example, if a closed loop is completely formed on the first screen 761, the input unit 330 may output the menu window 770 including an area determination menu 771 and a selection cancellation menu 772 as shown in FIG. 7B. The user may determine a selected area or may cancel and then reset the selected area by using the menu window 770.

FIG. 8 is a view illustrating an area selection operation of a method for screen mirroring, according to another embodiment of the present disclosure. The view of FIG. 8 corresponds to the view of FIG. 5, and a selection of an area is additionally displayed in FIG. 8 in comparison with FIG. 5.

Referring to FIG. 8, a selection of an area may be performed by using a figure tool without drawing a closed loop as shown in FIG. 6. In detail, if an operation such as dragging or the like is input through the input unit 330 after a preset motion, for example, a double click on a mouse, three consecutive touches, or two consecutive touches, a figure for selecting a first area may be automatically displayed and, the user may enlarge or reduce the displayed figure to determine a preset area.

For example, if the user double-clicks a center of an area of the first screen 515 that the user wants to select, by using a mouse, a figure 810 for selecting a preset area may be displayed on the first screen 515. A figure 860, same as the figure 810 for selecting the first area may be displayed on the second screen 565.

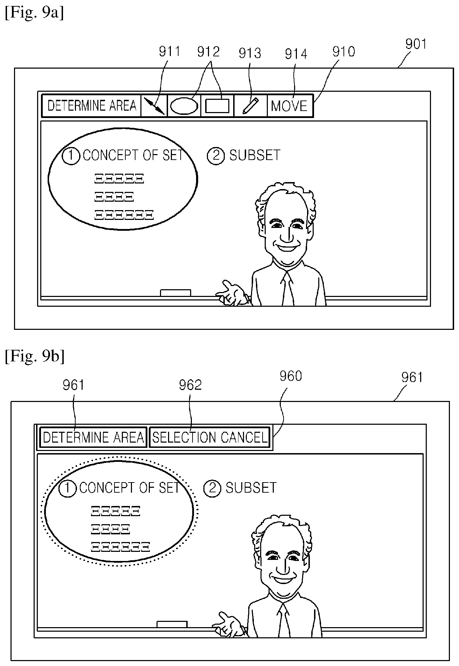

FIGS. 9A and 9B are views illustrating an area selection operation of a method for screen mirroring, according to another embodiment of the present disclosure. First screens 901 and 961 are screens of a sink device and are illustrated in FIGS. 9A and 9B. The first screens 901 and 961 of FIG. 9 correspond to the screen 515 of the tablet PC 510 that is a source device as shown in FIGS. 5 and 6, and an element for determining a selected area is additionally displayed in FIGS. 8, 9A, and 9B in comparison with FIGS. 5 and 6.

Operation 420 may further include an operation (not shown) of displaying at least one figure key for selecting a first area, and an operation (not shown) of moving and enlarging or reducing the figure key to select a designated area as a first area.

Referring to FIG. 9A, a menu 910 including at least one figure key for selecting an area may be displayed on the first screen 901.

For example, the menu 910 may include a diagonal select key 911, at least one of a figure key 912, a drawing key 913, and a move key 914. In detail, if a diagonal line of an area that is to be selected is designated, the diagonal select key 911 is used to select a square area corresponding to the diagonal line. An area may be drawn with a mouse by using the draw key 913, and a position of an area formed by the figure key 912 may be moved by using the move key 914.

Referring to FIG. 9B, a menu for determining an area selected by the figure key 912 may be displayed on the first screen 961. A menu window 960, an area determination menu 961, and a selection cancellation menu 962 of FIG. 9B respectively correspond to the menu window 770, the area determination menu 771, and the selection cancellation menu 772, and thus their detailed descriptions are omitted.

If the area is selected in operation 420, the first area is processed independently of a second area that is an area except the first area on the first screen in operation 430. Operation 430 may be performed by the controller 315.

In operation 440, the processing of operation 430 is reflected to execute a mirroring service in operation 440. In detail, the processing of operation 430 is reflected to display the first screen on at least one source device and mirror the first screen on at least one sink device to display the second screen. The first screen may be displayed on the display unit 320 under control of the controller 315, and the second screen may be displayed on the display unit 370 under control of the controller 365 to perform operation 410.

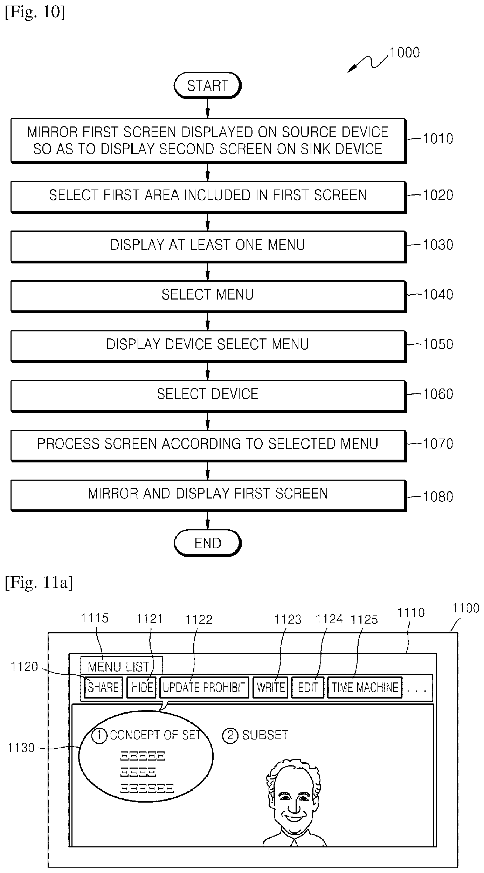

The processing of operation 430 will be described in more detail later with reference to FIGS. 10 through 17.

In operation 440, at least one sink device refers to a display device that is currently connected to or may be connected to a source device 310 that displays the first screen including the selected first area, through a network by wired and/or wireless. For example, the at least one sink device may be set to or automatically connected to a particular device according to setting of the user or a source device.

For example, operation 440 may include: when the first screen is updated, an operation of mirroring the first screen to update an area except the first area selected on the second screen in operation 420, and when the first screen is updated, an operation of not updating an area of the second screen corresponding to the first area.

FIG. 10 is a flowchart illustrating a method for screen mirroring, according to another embodiment of the present disclosure. Operations 1010, 1020, 1070, and 1080 of FIG. 10 respectively correspond to operations 410, 420, 430, and 440 of FIG. 4. Therefore, their repeated descriptions are omitted. Therefore, the method 1000 may be performed by a display device as described with reference to FIG. 3. In detail, the method 1000 may be performed by one of the source device 310 and the sink device 360. Therefore, the method will now be described with reference to FIGS. 3 through 10.

Referring to FIG. 10, the method 1000 includes operations 1010, 1020, 1030, 1040, 1070, and 1080. The method 1000 may further include operations 1050 and 1060.

In operation 1010, a first screen that is displayed on at least one source device is mirrored so as to display a second screen on at least one sink device.

In operation 1020, a first area included in the first screen is selected.

If a certain area, such as the first area, is selected in operation 1020, at least one menu for processing a screen of the first area independently of a screen of the second screen is displayed in operation 1030. In detail, in operation 1030, a menu screen including at least one of a menu for sharing the screen of the first area, a menu for hiding the screen of the first area, a menu for prohibiting updating of the screen of the first area, a menu for performing writing on the screen of the first area, and a menu for editing the screen of the first area may be displayed on one of at least one source device and at least one sink device. Operation 1030 may be performed by the input unit 330 and the display unit 320 under control of the controller 315. In detail, the input unit 330 receives the selection of the first area and generates a UI screen including the above-described menus. Here, the display unit 320 may display the UI screen.

Here, the at least one source device and the at least one sink device may refer to all types of display devices that are connected to and/or may be connected to the source device 310 that displays the first screen including the first area through a preset network, NFC, or the like by wired and/or wireless communication.

The menus displayed in operation 1030 will be described in more detail later with reference to FIG. 11A.

In operation 1040, one of the menus displayed in operation 1030 is selected. Operation 1040 may be performed through the input unit 330.

If the menu is selected in operation 1040, operations 1050 and 1060 may be omitted and a display of the first area is processed on the first screen according to the selected menu in operation 1070. In detail, if the preset menu is selected through the input unit 330, the controller 315 controls to display the display of the first area according to the selected preset menu.

If the menu is selected in operation 1040, a display of at least one of at least one source device and at least one sink device may be processed according to the selected menu. In detail, if the preset menu is selected through the input unit 330, the controller 315 may transmit a control signal to at least one of the at least one source device and the at least one sink device to perform the display according to the selected preset menu.

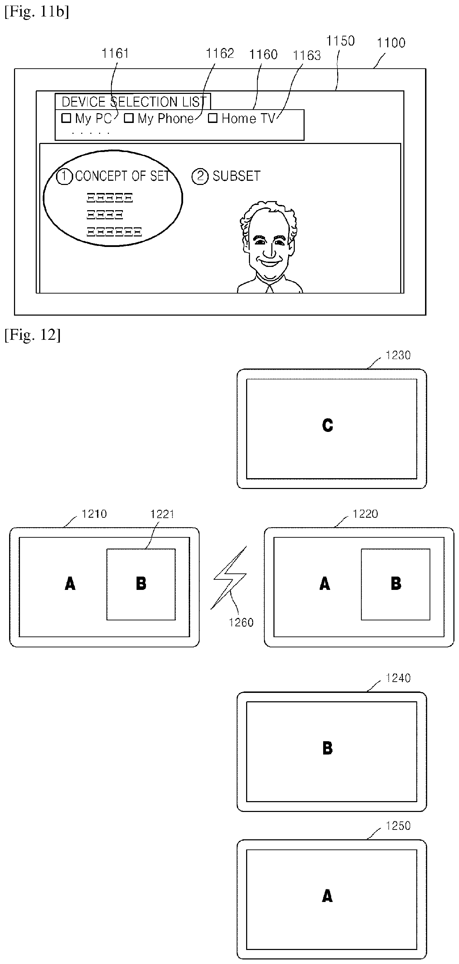

If the menu is completely selected in operation 1040, a device selection menu for selecting at least one of the at least one source device and the at least one sink device is displayed in operation 1050. Operation 1050 will be described in more detail later with reference to FIG. 11B.

In operation 1060, at least one device is selected through the device selection menu displayed in operation 1050. Operations 1050 and 1060 may be performed by the input unit 330 and the display unit 320. In detail, the input unit 330 may generate a UI screen including menus and receive a selection of a menu. Also, the display unit 330 may display the UI screen for selecting the menu.

In operation 1070, the display of the first area is processed on the first screen according to the selected menu. Also, image data including the first area that is processed according to the menu selected by a device selected in operation 1060 may be transmitted.

In operation 1080, the first screen is displayed on at least one source device and mirrored on at least one sink device to display the second screen according to the menu selected in operation 1040.

Operations 1040 through 1080 of the method 1000 will now be described in detail with reference to FIGS. 11A through 14B.

FIGS. 11A and 11B are views illustrating a menu selection operation and a device selection operation of a method for screen mirroring, according to another embodiment of the present disclosure. FIGS. 11A and 11B illustrate a first screen displayed on a source device 1100.

FIG. 12 is a view illustrating a detailed operation of a method for screen mirroring, according to another embodiment of the present disclosure. A source device 1210 that displays a first screen and a sink device 1220 that displays a second screen respectively correspond to the source device 310 and the sink device 360 of FIG. 3. Also, in FIG. 12, display devices 1230, 1240, and 1250 may be at least one of a sink device and/or a source device that may be connected to the source device 1220 to display the first screen through a network 1260.

Referring to FIG. 11A, if a first area is completely selected, the source device 1100 may display a menu list 1115 on a first screen 1110. In detail, the menu list 1115 may be output in a pop-up window form to display the first screen 1110.

The menu list 1115 may include at least one of a share menu 1120, a hide menu 1121, an update prohibit menu 1122, a write menu 1123, an edit menu 1124, and a time machine menu 1125.

The independent process of operation 430 (see FIG. 4) refers to processing performed according to a menu included in the menu list 1115. Processing performed according to each menu will now be described in detail.

Referring to FIGS. 10 and 11B, if a menu is completely selected, a device selection list 1160 that is a menu for selecting a device may be displayed on a second screen 1150. The device selection list 1160 includes a list of display devices that are currently connected to and/or may be connected to the source device 1100 through a communication network. For example, display devices such as a Personal Computer (PC) 1161, a cellular phone 1162, a TV 1163, etc. may be included in the device selection menu 1160. Also, the user may select at least one device from the device selection list 1160 and display a screen on the selected device according to the menu selected in operation 1040.

In detail, the share menu 1120 is used to share a screen of a first area 1130 (see FIG. 11A) that is selected with at least one of at least one sink device and at least one source device. In other words, when the first screen 1110 displayed by the source device 1100 is updated, at least one shared device may display the second screen 1150 corresponding to the first area 1130. Here, the at least one shared device may be a device selected in operation 1060.

Referring to FIGS. 10 and 12, if the share menu 1120 is selected in operation 1030, a screen of a first area 1221 may be shared with the display device 1240. In detail, as shown in FIG. 12, the display device 1240 may equally display screen B of the first area 1221. Here, the display device 1240 may be a sink device or a source device that is connected through a mirroring service. The display device 1240 may also be an electronic device that is connected to the source device 1210 through the mirroring service and/or a display device that may be connected to the source device 1210 through a communication network 1260.

The hide menu 1121 is used to prohibit image data displayed in a first area from being transmitted so that a screen of the first area 1130 included in a first screen 1110 is not shared with another display device. Therefore, if the other display device that may be connected to the source device 310 through a network requests the mirroring service, image data corresponding to a screen except the screen of the first area 1130 of the first screen 1110 is transmitted to the other display device. In this case, the other display device that requests the mirroring service may mirror and/or output a screen of a second area of the source device 310 and/or may not mirror a screen displayed in the first area 1130.

In detail, if the hide menu 1121 is selected in operation 1040, image data corresponding to a first area of a first screen may be prohibited from being transmitted to another display device. Here, a display device 1250 may be a device selected in operation 1060.

Referring to FIG. 12, if the hide menu 1121 is selected in operation 1030, and the display device 1250 requests the mirroring service, screen A except the first area 1221 may be mirrored and displayed.

The update prohibit menu 1122 is used not to update a screen displayed in the first area 1130 of the first screen 1110 displayed on the source device 1100 when the first screen 1110 displayed on the source device 1100 is updated.

The update prohibit menu 1122 may be used not to update a screen displayed in an area of a position corresponding to the first area 1130 of a first screen of another display device mirroring the source device 310 when the first screen 1110 displayed on the source device 1100 is updated. In this case, if the update prohibit menu 1122 is selected, the device select menu 1160 may be displayed, and a device that wants to prohibit updating of an area may be selected by using the displayed device select menu 1160. In this case, an area of a screen that is displayed on the selected device and corresponds to the first area 1130 may display a screen of the first area 1130, and another screen mirrors and updates the first screen 1110. Here, the source device 1100 may transmit a mirroring screen including the first area 1130 that is not updated by the selected device.

The update prohibit menu 1122 may be used not to update a screen of another display device that mirrors the source device 310 when the first screen 1110 displayed on the source device 1100 is updated. In this case, if the update prohibit menu 1122 is selected, the device select menu 1160 may be displayed, and a device that wants to prohibit updating of a screen may be selected by using the displayed device select menu 1160. In this case, the screen of the selected device is not updated by mirroring the first screen 1110, and a screen of the first area 1130 that is not updated may be displayed. Here, the source device 310 may transmit image data of the first area 1130 to the selected device, and the selected device displays the screen of the first area 1130 that is not updated, by using the image data of the first area 1130.

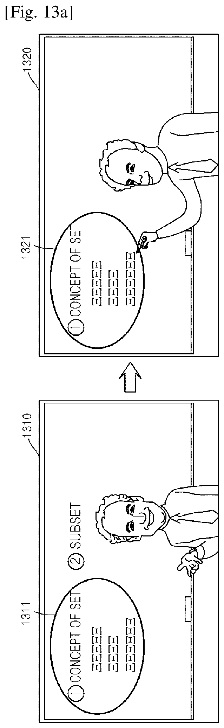

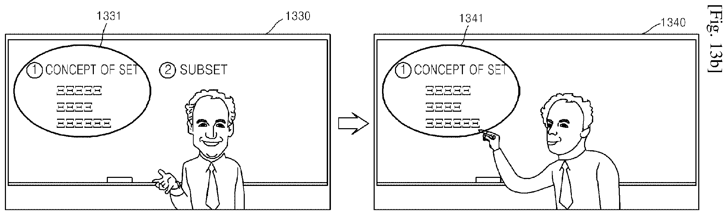

An operation of the update prohibit menu 1122 will now be described in more detail with reference to FIGS. 13A and 13B.

FIGS. 13A and 13B are views illustrating a detailed operation of a method for screen mirroring, according to another embodiment of the present disclosure.

Referring to FIG. 13A, a screen 1310 is displayed by the source device 310 at a time t1, and a screen 1320 is displayed by the source device 310 at a time t2.

Referring to FIG. 13B, a screen 1330 is displayed by the sink device 360 at the time t1, and a screen 1340 is displayed by the sink device 360 at the time t2.

If the update prohibit menu 1122 is selected, and a device is selected through the device selection list 1160, the screens 1330 and 1340 may be screens that are respectively output through the selected device at the times t1 and t2.

Referring to FIGS. 10, 13A and 13B, the source device 310 displays the screen 1310 at the time t1, and the sink device 360 that is connected to the source device 310 through the network 350 mirrors the screen 1310 to display the screen 1330 in operation 1010. Therefore, the screens 1310 and 1330 display the same screen.

In operation 1020, a first area 1311 displayed on the screen 1310 is selected. In operation 1040, the update prohibit menu 1122 may be selected. The first area 1311, which has been selected, may be displayed on the screen 1330.

The screen 1310 is updated at the time t2, subsequent to the time t1, and thus the screen 1320 is displayed at the time t2.

The source device 310 does not update the first area 1311, but updates and displays a screen of another area. Therefore, the screen 1320 displayed at the time t2 includes a screen of an area 1321 that is not updated.

A screen of the sink device 360 mirrors a screen of the source device 310, and thus the screen 1340 is updated according to the screen 1320. Here, if the sink device 360 is selected as a device that is to execute an update prohibit menu, an area 1341 may not be updated, and a screen displayed in an area 1331 at the time t1 may be maintained.

The write menu 1123 is used to display a write input of the user on a screen of the first area 1130 included in the first screen. The write menu 1123 may also be used to display a write input on the screen of the first area 1130 that is not updated and is described in the update prohibit menu 1122.

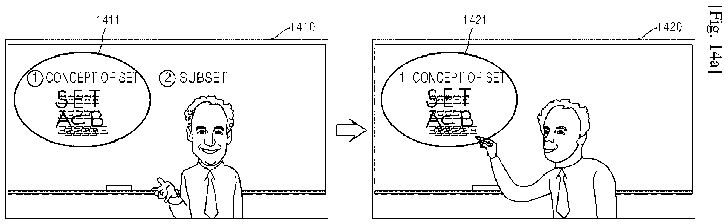

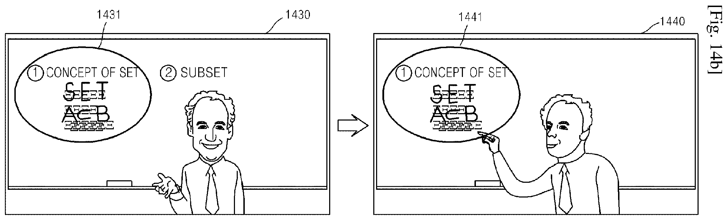

An operation of the write menu 1123 will now be described in more detail with reference to FIGS. 14A and 14B.

FIGS. 14A and 14B are views illustrating a detailed operation of a method for screen mirroring, according to another embodiment of the present disclosure.

Referring to FIG. 14A, a screen 1410 is displayed by the source device 310 at the time t1, and a screen 1420 is displayed by the source device 310 at the time t2 subsequent to the time t1.

Referring to FIG. 14B, a screen 1430 is displayed by the sink device 360 at the time t1, and a screen 1440 is displayed by the sink device 360 at the time t2.

If the write menu 1123 is selected, and a device is selected through the device selection list 1160, the screens 1430 and 1440 may be respectively output through the selected device at the times t1 and t2.

Referring to FIGS. 10, 14A and 14B, the source device 310 displays the screen 1410 at a time t1, and the sink device 360 that is connected to the source device 310 through the network 350 mirrors the screen 1410 to display the screen 1430 in operation 1010. Therefore, the screens 1410 and 1430 display the same screen.

In operation 1020, an area 1411 displayed on the screen 1410 is selected. In operation 1040, the write menu 1123 may be selected. A write input of the user may be displayed on the area 1411.

The screen 1410 is updated at the time t2, subsequent to the time t1, and thus the screen 1420 is displayed at the time t2.

As shown in FIG. 14A, the source device 310 may not update the area 1411 on which the write input is displayed and may update a screen of a second area, the second area excluding the first area, to display the screen 1420.

Since a screen of the sink device 360 mirrors a screen of the source device 310, the screen 1440 is updated according to the screen 1420. If the write menu 1123 is selected, and the sink device 360 is selected on a device select menu, a write input of the user displayed in an area 1441 may not be updated, but may be maintained on the screen 1440 displayed by the sink device 360 so as to continue to display information included in an area 1431 shown on the screen 1430.

The edit menu 1124 is used to edit the screen of a selected first area. In detail, the edit menu 1124 is used to perform works, such as a position movement, an area size adjustment, an area shape adjustment, an existing area deletion, etc., with respect to the first area 1130 selected by the user. If the edit menu 1124 is selected, a tool bar for editing may be subsequently displayed. For example, the tool bar may be adjacent to the first area 1130 in a pop-up window form.

In detail, the position movement work is to move a position of the first area 1130 selected by the user on the first screen 1110. The area size adjustment work is to adjust a size of a selected area. A motion of rotating an area selected through various gestures of the user, such as a multi-touch, etc., may be performed. The area shape adjustment work is to modify a shape of a preset area into various shapes of figures.

If the first area 1130 is edited by the edit menu 1124, menus included in the menu list 1115 may be executed. For example, after the first area 1130 is edited, the first area 1130 may be shared or may be prohibited from being updated.

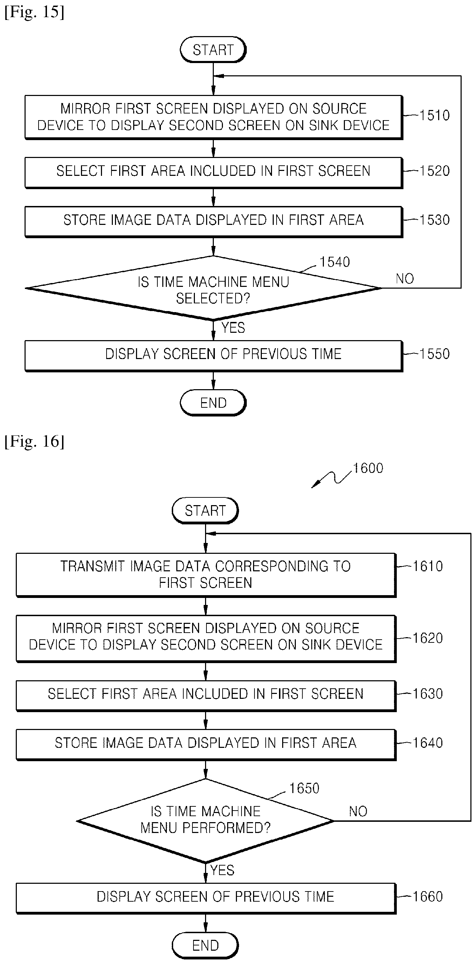

The time machine menu 1125 is used to perform time shifting onto a screen played at a previous preset time to play the first area 1130 selected in operation 1020. Processing performed according to the time machine menu 1125 will now be described in detail with reference to FIGS. 15 and 16.

FIG. 15 is a flowchart illustrating a detailed operation of a method for screen mirroring, according to another embodiment of the present disclosure. In detail, FIG. 15 is a flowchart illustrating an operation of executing a time machine menu in a source device. Operations 1510 and 1520 of FIG. 15 respectively correspond to operations 410 and 420 of FIG. 4, and thus their detailed descriptions are omitted.

Referring to FIGS. 3, 11, and 15, in operation 1530, the memory 335 of the source device 310 stores image data displayed in a first area. In detail, the memory 335 may store the image data displayed in the first area for a preset time. Alternatively, the memory 335 may store the image data displayed in the first area when a user executes a mirroring service.

In operation 1540, the controller 315 determines whether the time machine menu 1125 is selected. If the time machine menu 1125 is selected to request the time machine menu 1125 to be executed in operation 1540, then, in operation 1550, the controller 315 displays the first area as a screen of a preset previous time by using the image data of the first area stored in the memory 335. The first area screen of the preset previous time may be displayed on the display unit 335. Alternatively, the first area screen of the preset previous time may be mirrored to be displayed on the display unit 370 of the sink device 360.

FIG. 16 is a flowchart illustrating a detailed operation of a method for screening, according to another embodiment of the present disclosure.

Referring to FIG. 16, a flowchart illustrating an operation of executing a time machine menu in a sink device is illustrated. Operations 1620 and 1630 of FIG. 16 respectively correspond to operations 410 and 420 of FIG. 4, and thus their d

In operation 1610, the controller 315 of the source device 310 transmits image data corresponding to a first screen to the sink device 360 to execute a mirroring service.

In operation 1620, the controller 315 executes the mirroring service by using the transmitted image data. In operation 1630, a first area is selected on the source device 310.

In operation 1640, image data that is received from the memory 385 of the sink device 360 and displayed in the first area may be stored.

In operation 1650, the controller 315 determines whether the time machine menu 1125 is selected. If the time machine menu 1125 is requested to be executed in operation 1650, the controller 365 of the sink device 360 displays the first area as a screen of a previous time by using the image data stored in the memory 385 in operation 1660.

For example, if the user does not determine and/or view preset contents when using a mirroring service, the controller 365 may return to and play a screen played within a preset time by using the time machine menu 1125. For example, if a student misses contents written on a blackboard by a lecturer when listening to a video lecture, the student that is a user may review the contents written on the blackboard by using the time machine menu 1125.

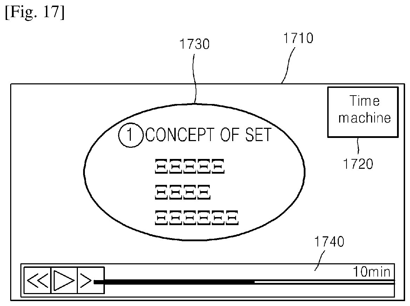

FIG. 17 is a view illustrating a detailed operation of a method for screen mirroring, according to another embodiment of the present disclosure.

Referring to FIGS. 3, 11, and 17, if a time machine menu is executed, the source device 310 and/or the sink device 360 displays a screen.

A preset area 1730 of FIG. 17 corresponds to the first area 1130 of FIG. 11.

Referring to FIG. 17, if a time machine function is requested for the preset area 1730, a time table play menu 1740 is displayed on a screen 1710. A user may control the time table play menu 1740 to re-display a screen of a first area displayed at a preset previous time. A mark 1720 indicating that the time machine function is being performed may be displayed on the screen 1710.

As described above, according to the one or more of the above embodiments of the present disclosure, in a method for screen mirroring and a source device thereof, a screen mirrored when using a mirroring service may be changed and used according to an intention of a user. Therefore, the mirroring service may be variously used according to the intention of the user.

In addition, other embodiments of the present disclosure can also be implemented through computer readable code/instructions in/on a medium, e.g., a computer readable medium, to control at least one processing element to implement any above described embodiment. The medium can correspond to any medium/media permitting the storage and/or transmission of the computer readable code.

The computer readable code may be recorded and/or transferred on a medium in a variety of ways, with examples of the medium including recording media, such as magnetic storage media, e.g., a Read Only Memory (ROM), floppy disks, hard disks, etc., and optical recording media, e.g., Compact Disk (CD)-ROMs, and/or Digital Versatile Disks (DVDs), and transmission media such as Internet transmission media. Thus, the medium may be such a defined and measurable structure including or carrying a signal or information, such as a device carrying a bitstream according to one or more embodiments of the present disclosure. The media may also be a distributed network, so that the computer readable code is stored/transferred and executed in a distributed fashion. Furthermore, the processing element could include a processor and/or a computer processor, and/or any other similar and/or suitable hardware elements capable of processing information, and processing elements may be distributed and/or included in a single device.

While the present disclosure has been shown and described with reference to various embodiments thereof, it will be understood by those skilled in the art that various changes in form and details may be made therein without departing from the scope of the present disclosure as defined by the appended claims.

## Claims

1. A source device (310) comprising:
a display unit (320);
an input unit (330);
a transceiver (325); and
a controller (315), configured to:
control the display unit (320) to display video data in a first screen (1100);
execute a mirroring service with at least one sink device (360) by transmitting image data corresponding to the first screen displayed via the display unit (320);
control the input unit (330) to receive a selection of a first area (1130) included in the video data of the first screen (1100) of which at least one area is mirrored on the at least one sink device (360);
process the first area (1130) independently of a second area, the second area being an area of the video data of the first screen except the first area (1130), when the mirroring service is executed; and
control the transceiver (325) to transmit image data corresponding to the first screen to mirror the first screen (1100) reflecting the processing of the first area (1130) on the at least one sink device (360) when the mirroring service is executed,
wherein the selection of the first area is received according to a first selection operation or a second selection operation,
wherein, in the first selection operation:
the input unit (330) is configured to receive the selection of the first area (1130) by sensing a closed loop formed by at least one of a touch pen, a mouse, and a finger, and
the controller (315) is configured to determine the first area (1130) according to the sensed closed loop, and
wherein, in the second selection operation, the controller (315) is further configured to:
control the display unit (320) to display at least one figure key (912) for selecting the first area (1130), and
control the input unit (330) to receive the selection of the first area (1130) by a selection of a figure key (912) from the at least one figure key and receiving user input for moving, enlarging or reducing the figure key (912) to select a designated area as the first area (1130).

2. The source device (310) of claim 1, wherein the controller (315) is configured to control the display unit (320) to display at least one menu (1120, 1121, 1122, 1123, 1124, 1125) for processing the first area (1130) independently of the second area.

3. The source device (310) of claim 2, wherein the controller (315) is configured to control the display unit (320) to display a menu screen, comprising at least one of a menu (1120) for sharing a screen of the first area (1130), a menu (1121) for hiding the screen of the first area (1130), a menu (1122) for prohibiting updating of the screen of the first area (1130), a menu (1123) for writing on the screen of the first area (1130), and a menu (1124) for editing the screen of the first area (1130), on at least one of the source device (310) and the at least one sink device (360).

4. The source device (310) of claim 2, wherein, if a menu is selected from the at least one menu (1120, 1121, 1122, 1123, 1124, 1125), the controller (315) is configured to process a display of the first area (1130) according to the selected menu.

5. The source device (310) of claim 4, wherein, if the menu is selected from the at least one menu (1120, 1121, 1122, 1123, 1124, 1125), the controller (315) is configured to process a display of the source device (310) and the at least one sink device (360) according to the selected menu.

6. The source device (310) of claim 1, wherein the controller (315) is configured to control at least one shared device, from among the at least one sink device (360), to maintain a screen of the first area (1130) when the first screen (1100) is updated, so that the screen of the first area (1130) is continuously shared with the shared device.

7. The source device (310) of claim 6, wherein the controller (315) is configured to:
control the display unit (320) to display a device select menu (1160) for selecting a device from among the at least one sink device (360),
control the input unit to receive a selection of the device through the device select menu (1160),
control the transceiver (325) to transmit image data corresponding to the first area to the selected device, and
control the display unit (320) to display the screen of the first area on the selected device.

8. The source device (310) of claim 1, wherein the controller (320) is configured to prohibit transmitting image data corresponding to the first area.

9. The source device (310) of claim 8, wherein, if the at least one sink device (360) requests a mirroring service for the first screen (1100), the controller (315) is configured to transmit image data corresponding to the second area to the at least one sink device (360).

10. The source device (310) of claim 1, wherein the controller (315) is configured to control the at least one sink device (360) to mirror and update an area except the first area on the first screen (1100) and not to update an area corresponding to the first area (1130) of the first screen (1100).

11. The source device (310) of clam 10, wherein the controller (315) is configured to display a write input of a user in the first area (1130) that is not updated.

12. The source device (310) of claim 1, further comprising:
a memory (335) configured to store image data displayed in the first area,
wherein if a time machine menu (1125) is requested to be executed, the controller (315) is configured to display the first area (1130) as a screen of a preset previous time by using the stored image data.

13. A method for screen mirroring performed in a source device (310), the method comprising:
displaying video data in a first screen (1100) on the source device (310);
mirroring the first screen displayed the source device (310) to display a second screen (560) on at least one sink device (360) (operation 410);
when executing a mirroring service, selecting a first area (1130) included in the video data of the first screen (operation 420) of which at least one area is mirrored on the at least one sink device (360);
processing the first area (1130) independently of a second area, the second area being an area of the video data of the first screen except the first area (1130) (operation 430), when the mirroring service is executed; and
mirroring the first screen (1100) reflecting the processing of the first area (1130) on the at least one sink device (operation 440),
wherein the first area is selected according to a first selection operation or a second selection operation,
wherein, in the first selection operation, the selecting the first area comprises:
sensing a closed loop formed by at least one of a touch pen, a mouse, and a finger, and
determining the first area (1130) according to the sensed closed loop, and wherein, in the second selection operation, the selecting the first area comprises:
displaying at least one figure key (912) for selecting the first area (1130), and
selecting the first area (1130) by a selection of a figure key (912) from the at least one figure key and receiving user input for moving, enlarging or reducing the figure key (912) to select a designated area as the first area (1130).

## Patentansprüche

1. Quellvorrichtung (310), umfassend:
eine Anzeigeeinheit (320);
eine Eingabeeinheit (330);
einen Sender-Empfänger (325); und
eine Steuerung (315), die zu Folgendem konfiguriert ist:
Steuern der Anzeigeeinheit (320) zum Anzeigen von Videodaten auf einem ersten Bildschirm (1100); Ausführen eines Spiegelungsdiensts mit mindestens einer Empfangsvorrichtung (360) durch Übertragen von Bilddaten, die dem ersten Bildschirm entsprechen, der über die Anzeigeeinheit (320) angezeigt wird;
Steuern der Eingabeeinheit (330) zum Empfangen einer Auswahl eines ersten Bereichs (1130), der in den Videodaten des ersten Bildschirms (1100) enthalten ist, von dem mindestens ein Bereich auf der mindestens einen Empfangsvorrichtung (360) gespiegelt wird;
Verarbeiten des ersten Bereichs (1130) unabhängig von einem zweiten Bereich, wobei der zweite Bereich ein Bereich der Videodaten des ersten Bildschirms mit Ausnahme des ersten Bereichs (1130) ist, wenn der Spiegelungsdienst ausgeführt wird; und
Steuern des Sender-Empfängers (325) zum Übertragen von Bilddaten, die dem ersten Bildschirm entsprechen, um den ersten Bildschirm (1100) zu spiegeln, was die Verarbeitung des ersten Bereichs (1130) auf der mindestens einen Empfangsvorrichtung (360) widerspiegelt, wenn der Spiegelungsdienst ausgeführt wird,
wobei die Auswahl des ersten Bereichs gemäß einem ersten Auswahlvorgang oder einer zweiten Auswahlvorgang empfangen wird,
wobei in dem ersten Auswahlvorgang:
die Eingabeeinheit (330) konfiguriert ist, um die Auswahl des ersten Bereichs (1130) durch Abtasten einer geschlossenen Schleife zu empfangen, die durch mindestens eines von einem Touchpen, einer Maus und einem Finger gebildet wird, und
die Steuerung (315) konfiguriert ist, um den ersten Bereich (1130) gemäß der erfassten geschlossenen Schleife zu bestimmen, und
wobei in dem zweiten Auswahlvorgang die Steuerung (315) ferner zu Folgendem konfiguriert ist:
Steuern der Anzeigeeinheit (320) zum Anzeigen mindestens einer Bildtaste (912) zum Auswählen des ersten Bereichs (1130), und
Steuern der Eingabeeinheit (330) zum Empfangen der Auswahl des ersten Bereichs (1130) durch eine Auswahl einer Bildtaste (912) aus der mindestens einen Bildtaste und Empfangen von Benutzereingaben zum Bewegen, Vergrößern oder Verkleinern der Bildtaste (912), um einen bezeichneten Bereich als den ersten Bereich (1130) auszuwählen.

2. Quellvorrichtung (310) nach Anspruch 1, wobei die Steuerung (315) konfiguriert ist, um die Anzeigeeinheit (320) zu steuern, um mindestens ein Menü (1120, 1121, 1122, 1123, 1124, 1125) zum Verarbeiten des ersten Bereichs (1130) unabhängig von dem zweiten Bereich anzuzeigen.

3. Quellvorrichtung (310) nach Anspruch 2, wobei die Steuerung (315) konfiguriert ist, um die Anzeigeeinheit (320) zum Anzeigen eines Menübildschirms zu steuern, umfassend mindestens eines von einem Menü (1120) zum Teilen eines Bildschirms des ersten Bereichs (1130), ein Menü (1121) zum Ausblenden des Bildschirms des ersten Bereichs (1130), ein Menü (1122) zum Unterbinden einer Aktualisierung des Bildschirms des ersten Bereichs (1130), ein Menü (1123) zum Schreiben auf den Bildschirm des ersten Bereichs (1130) und ein Menü (1124) zum Bearbeiten des Bildschirms des ersten Bereichs (1130) auf mindestens einer Quellvorrichtung (310) und der mindestens einen Empfangsvorrichtung (360).

4. Quellvorrichtung (310) nach Anspruch 2, wobei, wenn ein Menü aus dem mindestens einen Menü (1120, 1121, 1122, 1123, 1124, 1125) ausgewählt wird, die Steuerung (315) konfiguriert ist, um eine Anzeige des ersten Bereichs (1130) gemäß dem ausgewählten Menü zu verarbeiten.

5. Quellvorrichtung (310) nach Anspruch 4, wobei, wenn das Menü aus dem mindestens einen Menü (1120, 1121, 1122, 1123, 1124, 1125) ausgewählt wird, die Steuerung (315) konfiguriert ist, um eine Anzeige der Quellvorrichtung (310) und der mindestens einen Empfangsvorrichtung (360) gemäß dem ausgewählten Menü zu verarbeiten.

6. Quellvorrichtung (310) nach Anspruch 1, wobei die Steuerung (315) konfiguriert ist, um mindestens eine gemeinsame Vorrichtung von der mindestens einen Empfangsvorrichtung (360) zu steuern, um einen Bildschirm des ersten Bereichs (1130) beizubehalten, wenn der erste Bildschirm (1100) aktualisiert wird, sodass der Bildschirm des ersten Bereichs (1130) kontinuierlich mit der gemeinsamen Vorrichtung geteilt wird.

7. Quellvorrichtung (310) nach Anspruch 6, wobei die Steuerung (315) zu Folgendem konfiguriert ist:
Steuern der Anzeigeeinheit (320) zum Anzeigen eines Vorrichtungsauswahlmenü (1160) zum Auswählen einer Vorrichtung von der mindestens einen Spüleinrichtung (360),
Steuern der Eingabeeinheit, um eine Auswahl der Vorrichtung durch das Vorrichtungsauswahlmenü (1160) zu empfangen,
Steuern des Sender-Empfängers (325) zum Übertragen von Bilddaten entsprechend dem ersten Bereich an die ausgewählte Vorrichtung, und
Steuern der Anzeigeeinheit (320), um den Bildschirm des ersten Bereichs auf der ausgewählten Vorrichtung anzuzeigen.

8. Quellvorrichtung (310) nach Anspruch 1, wobei die Steuerung (320) konfiguriert ist, um ein Übertragen von Bilddaten entsprechend dem ersten Bereich zu unterbinden.

9. Quellvorrichtung (310) nach Anspruch 8, wobei, wenn die mindestens eine Empfangsvorrichtung (360) einen Spiegelungsdienst für den ersten Bildschirm (1100) anfordert, die Steuerung (315) konfiguriert ist, um Bilddaten entsprechend dem zweiten Bereich an die mindestens eine Empfangsvorrichtung (360) zu übertragen.

10. Quellvorrichtung (310) nach Anspruch 1, wobei die Steuerung (315) konfiguriert ist, um die mindestens eine Empfangsvorrichtung (360) zu steuern, um einen Bereich mit Ausnahme des ersten Bereichs auf dem ersten Bildschirm (1100) zu spiegeln und zu aktualisieren, und einen Bereich entsprechend dem ersten Bereich (1130) des ersten Bildschirms (1100) nicht zu aktualisieren.

11. Quellvorrichtung (310) nach Anspruch 10, wobei die Steuerung (315) konfiguriert ist, um eine Schreibeingabe eines Benutzers in dem ersten Bereich (1130) anzuzeigen, der nicht aktualisiert wird.

12. Quellvorrichtung (310) nach Anspruch 1, ferner umfassend:
einen Speicher (335), der konfiguriert ist, um Bilddaten zu speichern, die in dem ersten Bereich angezeigt werden, wobei, wenn eine Ausführung eines Zeitmaschinenmenüs (1125) angefordert wird, die Steuerung (315) konfiguriert ist, um unter Verwendung der gespeicherten Bilddaten den ersten Bereich (1130) als Bildschirm einer vorgegebenen vorherigen Zeit anzuzeigen.

13. Verfahren zur Bildschirmspiegelung, das in einer Quellvorrichtung (310) durchgeführt wird, wobei das Verfahren Folgendes umfasst:
Anzeigen von Videodaten auf einem ersten Bildschirm (1100) an der Quellvorrichtung (310);
Spiegeln des ersten angezeigten Bildschirms der Quellvorrichtung (310), um einen zweiten Bildschirm (560) auf mindestens einer Empfangsvorrichtung (360) anzuzeigen (Vorgang 410);
beim Ausführen eines Spiegelungsdiensts Auswählen eines ersten Bereichs (1130), der in den Videodaten des ersten Bildschirms (Vorgang 420) enthalten ist, von dem mindestens ein Bereich auf der mindestens einen Empfangsvorrichtung (360) gespiegelt ist;
Verarbeiten des ersten Bereichs (1130) unabhängig von einem zweiten Bereich, wobei der zweite Bereich ein Bereich der Videodaten des ersten Bildschirms mit Ausnahme des ersten Bereichs (1130) (Vorgang 430) ist, wenn der Spiegelungsdienst ausgeführt wird; und
Spiegeln des ersten Bildschirms (1100), der die Verarbeitung des ersten Bereichs (1130) auf der mindestens einen Empfangsvorrichtung (Vorgang 440) widerspiegelt,
wobei der erste Bereich gemäß einem ersten Auswahlvorgang oder einem zweiten Auswahlvorgang ausgewählt wird,
wobei in dem ersten Auswahlvorgang das Auswählen des ersten Bereichs Folgendes umfasst:
Erfassen einer geschlossenen Schleife, die durch mindestens eines von einem Touchpen, einer Maus und einem Finger gebildet wird, und
Bestimmen des ersten Bereichs (1130) gemäß der erfassten geschlossenen Schleife, und wobei, in dem zweiten Auswahlvorgang, das Auswählen des ersten Bereichs Folgendes umfasst:
Anzeigen mindestens einer Bildtaste (912) zum Auswählen des ersten Bereichs (1130) und Auswählen des ersten Bereichs (1130) durch eine Auswahl einer Bildtaste (912) aus der mindestens einen Bildtaste und Empfangen von Benutzereingaben zum Bewegen, Vergrößern oder Verkleinern der Bildtaste (912), um einen bezeichneten Bereich als den ersten Bereich (1130) auszuwählen.

## Revendications

1. Dispositif source (310) comprenant :
une unité d'affichage (320) ;
une unité d'entrée (330);
un émetteur-récepteur (325) ; et
un dispositif de commande (315), configuré pour :
commander l'unité d'affichage (320) d'afficher des données vidéo sur un premier écran (1100) ; exécuter un service de duplication d'écran avec au moins un dispositif récepteur (360) en émettant des données d'image correspondantes au premier écran affiché par l'intermédiaire de l'unité d'affichage (320) ;
commander l'unité d'entrée (330) de recevoir une sélection d'une première zone (1130) comprise dans les données vidéo du premier écran (1100) dont au moins une zone est dupliquée sur le au moins un dispositif récepteur (360) ;
traiter la première zone (1130) indépendamment d'une seconde zone, la seconde zone étant une zone des données vidéo du premier écran à l'exception de la première zone (1130), lorsque le service de duplication est exécuté ; et
commander l'émetteur-récepteur (325) d'émettre des données d'image correspondantes vers le premier écran pour dupliquer le premier écran (1100) reflétant le traitement de la première zone (1130) sur le au moins un dispositif récepteur (360) lorsque le service de duplication est exécuté,
ladite sélection de la première zone étant reçue selon une première opération de sélection ou une seconde opération de sélection,
dans la première opération de sélection :
ladite unité d'entrée (330) étant configurée pour recevoir la sélection de la première zone (1130) en détectant une boucle fermée formée par au moins l'un d'un stylet tactile, d'une souris et d'un doigt, et
ledit dispositif de commande (315) étant configuré pour déterminer la première zone (1130) selon la boucle fermée détectée, et
dans la seconde opération de sélection, ledit dispositif de commande (315) étant en outre configuré pour :
commander l'unité d'affichage (320) d'afficher au moins une touche pictogramme (912) destinée à la sélection de première zone (1130), et
commander l'unité d'entrée (330) de recevoir la sélection de la première zone (1130) en sélectionnant une touche pictogramme (912) à partir de la au moins une touche pictogramme et en recevant une entrée utilisateur pour déplacer, agrandir ou réduire la touche pictogramme (912) pour sélectionner une zone désignée en tant que première zone (1130).

2. Dispositif source (310) selon la revendication 1, ledit dispositif de commande (315) étant configuré pour commander l'unité d'affichage (320) d'afficher au moins un menu (1120, 1121, 1122, 1123, 1124, 1125) pour traiter la première zone (1130) indépendamment de la second zone.

3. Dispositif source (310) selon la revendication 2, ledit dispositif de commande (315) étant conçu pour commander l'unité d'affichage (320) d'afficher un écran de menu, comprenant au moins l'un d'un menu (1120) pour partager un écran de la première zone (1130), un menu (1121) pour masquer l'écran de la première zone (1130), un menu (1122) pour interdire la mise à jour de l'écran de la première zone (1130), un menu (1123) pour écrire sur l'écran de la première zone (1130) et un menu (1124) pour éditer l'écran de la première zone (1130), sur au moins l'un du dispositif source (310) et du au moins un dispositif récepteur (360).

4. Dispositif source (310) selon la revendication 2, si un menu est sélectionné à partir du au moins un menu (1120, 1121, 1122, 1123, 1124, 1125), ledit dispositif de commande (315) étant configuré pour traiter un affichage de la première zone (1130) selon le menu sélectionné.

5. Dispositif source (310) selon la revendication 4, si le menu est sélectionné à partir du au moins un menu (1120, 1121, 1122, 1123, 1124, 1125), ledit dispositif de commande (315) étant configuré pour traiter un affichage du dispositif source (310) et du au moins un dispositif récepteur (360) selon le menu sélectionné.

6. Dispositif source (310) selon la revendication 1, ledit dispositif de commande (315) étant configuré pour commander au moins un dispositif partagé, parmi le au moins un dispositif récepteur (360), afin de maintenir un écran de la première zone (1130) lorsque le premier écran (1100) est mis à jour, afin que l'écran de la première zone (1130) soit continuellement partagé avec le dispositif partagé.

7. Dispositif source (310) selon la revendication 6, ledit dispositif de commande (315) étant configuré pour :
commander l'unité d'affichage (320) d'afficher un menu de sélection de dispositif (1160) pour sélectionner un dispositif parmi le au moins un dispositif récepteur (360),
commander l'unité d'entrée de recevoir une sélection du dispositif par l'intermédiaire du menu de sélection de dispositif (1160),
commander l'émetteur-récepteur (325) d'émettre les données d'image correspondant à la première zone vers le dispositif sélectionné, et
commander l'unité d'affichage (320) d'afficher l'écran de la première zone sur le dispositif sélectionné.

8. Dispositif source (310) selon la revendication 1, ledit dispositif de commande (320) étant configuré pour interdire l'émission de données d'image correspondant à la première zone.

9. Dispositif source (310) selon la revendication 8, si le au moins un dispositif récepteur (360) demande un service de duplication pour le premier écran (1100), ledit dispositif de commande (315) étant configuré pour émettre des données d'image correspondant à la seconde zone vers le au moins un dispositif récepteur (360).

10. Dispositif source (310) selon la revendication 1, ledit dispositif de commande (315) étant configuré pour commander le au moins un dispositif récepteur (360) de dupliquer et de mettre à jour une zone sauf la première zone sur le premier écran (1100) et de ne pas mettre à jour une zone correspondant à la première zone (1130) du premier écran (1100).

11. Dispositif source (310) selon la revendication 10, ledit dispositif de commande (315) étant configuré pour afficher une entrée d'écriture d'un utilisateur dans la première zone (1130) qui n'est pas mise à jour.

12. Dispositif source (310) selon la revendication 1, comprenant en outre :
une mémoire (335) configurée pour stocker des données d'image affichées dans la première zone, si un menu de machine temporel (1125) doit être exécuté, ledit dispositif de commande (315) étant configuré pour afficher la première zone (1130) sous la forme d'un écran d'un horaire précédent prédéfini à l'aide les données d'image stockées.

13. Procédé permettant la duplication d'écran effectué dans un dispositif source (310), le procédé comprenant :
l'affichage des données vidéo dans un premier écran (1100) sur le dispositif source (310) ; la duplication du premier écran affiché le dispositif source (310) pour afficher un second écran (560) sur au moins un dispositif récepteur (360) (opération 410) ;
lorsqu'un service de duplication est exécuté, la sélection d'une première zone (1130) comprise dans les données vidéo du premier écran (opération 420) dont au moins une zone est dupliquée sur le au moins un dispositif récepteur (360) ;
le traitement de la première zone (1130) indépendamment d'une seconde zone, la seconde zone étant une zone des données vidéo du premier écran à l'exception de la première zone (1130) (opération 430), lorsque le service de duplication est exécuté ; et
la duplication du premier écran (1100) reflétant le traitement de la première zone (1130) sur le au moins un dispositif récepteur (opération 440),
ladite première zone étant sélectionnée selon une première opération de sélection ou une seconde opération de sélection,
dans la première opération de sélection, ladite sélection de la première zone comprenant :
la détection d'une boucle fermée formée par au moins l'un d'un stylet tactile, d'une souris et d'un doigt, et
la détermination de la première zone (1130) selon la boucle fermée détectée, et, dans la seconde opération de sélection, ladite sélection de la première zone comprenant :
l'affichage d'au moins une touche pictogramme (912) pour sélectionner la première zone (1130) et la sélection de la première zone (1130) en sélectionnant une touche pictogramme (912) parmi la au moins une touche pictogramme et la réception d'une entrée utilisateur pour déplacer, agrandir ou réduire la touche pictogramme (912) pour sélectionner une zone désignée en tant que première zone (1130).
